# EUROPÄISCHE PATENTSCHRIFT

(11) **EP 1 624 516 B1**
(45) Veröffentlichungstag und Bekanntmachung des Hinweises auf die Patenterteilung: **17.10.2012**
(21) Anmeldenummer: 04018286.7
(22) Anmeldetag: 02.08.2004
(51) Int. Cl.: H01M 8/24, H01M 8/04

(54) **Verfahren zum Betreiben einer in einem Einbauraum angeordneten und mit einem Brenngas und mit Luft betriebenen Brennstoffzellenanlage sowie Anordnung zur Durchführung des Verfahrens**
Process of operating an air and fuel supplied fuel cell unit contained in an enclosure and an installation of performing the process
Méthode de fonctionnement d'une pile a combustible placée dans un logement et dispositif pour mettre en oeuvre le procédé

(43) Veröffentlichungstag der Anmeldung: 08.02.2006
(73) Patentinhaber: SIEMENS AKTIENGESELLSCHAFT, 80333 München (DE)
(72) Erfinder: Bette, Willi, 91056 Erlangen (DE); Stühler, Walter, 96114 Hirschaid (DE)

(56) Entgegenhaltungen:
- WO-A-96/02951
- WO-A-02/103831
- DE-A- 10 104 503
- DE-A- 19 743 075
- US-B1- 6 610 431

## Beschreibung

Die Erfindung betrifft ein Verfahren zum Betreiben einer in einem Einbauraum angeordneten und mit einem Brenngas und mit Luft betriebenen Brennstoffzellenanlage gemäß Oberbegriff des Patentanspruchs 1 sowie eine für die Durchführung des Verfahrens geeignete Anordnung gemäß Oberbegriff des Patentanspruchs 9; ein derartiges Verfahren bzw. eine derartige Anordnung sind z.B. aus der DE 101 04 503 A1 bekannt.

Eine Brennstoffzelle weist zwei von einem Elektrolyt elektrisch getrennte Elektroden (eine Anode und eine Kathode) auf. Bei einer mit Luft und einem Brenngas betriebenen Brennstoffzelle wird das Brenngas der Anode und die Luft der Kathode der Brennstoffzelle zugeleitet. Der Elektrolyt lässt zwar einen Ionenaustausch zwischen dem Brenngas und dem Sauerstoff der Luft zu, stellt aber ansonsten eine gasdichte Trennung des Brenngases und der Luft sicher. Infolge des Ionenaustausches kann im Brenngas enthaltender Wasserstoff mit dem Sauerstoff der Luft zu Wasser reagieren, wobei sich an der Anode ein Elektronenüberschuss und an der Kathode ein Elektronendefizit und somit eine nutzbare Potentialdifferenz zwischen der Anode und der Kathode aufbaut.

Beispiele für mit einem Brenngas und mit Luft betreibbaren Brennstoffzellen sind die Polymer-Elektrolyt-Membran (PEM)-Brennstoffzelle (mit Wasserstoff als Brenngas), die phosphorsaure Brennstoffzelle (z.B. mit Wasserstoff aus reformiertem Erdgas als Brenngas), die Schmelzkarbonat (MCFC)-Brennstoffzelle (z.B. mit einem Wasserstoff-/CO-Gemisch als Brenngas) oder die Festkeramische (SOFC) Brennstoffzelle (z.B. mit einem Wasserstoff-/CO-Gemisch als Brenngas).

Mit Luft betriebene Brennstoffzellenanlagen umfassen in der Regel ein oder mehrere Brennstoffzellenstapel (auch Brennstoffzellen-Stacks genannt), Versorgungseinrichtungen für die Zu- und Abfuhr von Brenngas, Luft und Kühlmittel sowie Sicherheits-, Relegungs- und Überwachungseinrichtungen. Üblicherweise sind diese Brennstoffzellenanlagen in einem Einbauraum angeordnet bzw. aufgestellt. Hierbei kann es sich z.B. um einen Einbauraum in einem Kraftfahrzeug, einem Schiff, einem Gebäude oder einem mobilen Transportcontainer handeln.

Bei den Brennstoffzellenstapeln und den Versorgungseinrichtungen für das Brenngas können unter Umständen kleinste Undichtigkeiten nicht ganz ausgeschlossen werden. Dies gilt insbesondere für mobile Brennstoffzellenanlagen, die besonderen Beanspruchungen durch Schock und Vibrationen ausgesetzt sind. Durch solche Undichtigkeiten können geringe Mengen an Brenngas in den Einbauraum der Brennstoffzellenanlage gelangen. Um eine Ansammlung von Brenngas und möglicherweise eine Entstehung eines explosiven Gemisches zu vermeiden, ist es vorgeschrieben, solche Einbauräume zu belüften.

Aus der DE 101 04 503 A1 ist es bekannt, in den Einbauraum der Brennstoffzellenanlage ausgetretenen Wasserstoff zu den Kathoden der Brennstoffzellen der Brennstoffanlage zu führen und dort mit Luft thermisch abzureagieren. Hierdurch kann auch ohne zusätzliche Belüftung und der dafür notwendigen Einrichtungen die Bildung explosiver Gemische in dem Einbauraum vermieden werden. Der in den Einbauraum ausgetretene Wasserstoff wird hierbei mittels einer oberhalb des Brennstoffzellenstapels angeordneten Absaugeinrichtung aus dem Einbauraum abgesaugt, mit von außerhalb des Einbauraumes angesaugter Luft vermischt und das Gemisch zur thermischen Abreaktion den Kathoden der Brennstoffzellen zugeführt.

Es ist Aufgabe vorliegender Erfindung, das bekannte Verfahren hinsichtlich der Abförderung aus der Brennstoffzellenanlage ausgetretenen Brenngases weiter zu verbessern und eine zugehörige Anordnung zu schaffen.

Die Lösung der auf das Verfahren gerichteten Aufgabe gelingt erfindungsgemäß durch ein Verfahren gemäß Patentanspruch 1. Die Lösung der auf die Anordnung gerichteten Aufgabe gelingt erfindungsgemäß durch eine Anordnung gemäß Patentanspruch 8. Vorteilhafte Weiterbildungen des Verfahrens bzw. der Anordnung sind jeweils Gegenstand der abhängigen Ansprüche.

Das erfindungsgemäße Verfahren sieht vor, dass die Luft in den Einbauraum geleitet wird, durch den Einbauraum strömt und anschließend den Kathoden der Brennstoffzellen zugeführt wird. Es wird somit Luft für den Betrieb der Brennstoffzellen zur Abförderung des in den Einbauraum ausgetretenen Brenngases zu den Kathoden der Brennstoffzellen verwendet.

Während im bekannten Fall jeweils unterschiedliche Ansaugwege für die Luft und das in den Einbauraum ausgetretene Brenngas vorgesehen sind, erfolgt die Ansaugung der Luft und des Brenngases nun über einen gemeinsamen Ansaugweg. Die Abförderung des Brenngases, dessen Zuführung zu den Kathoden der Brennstoffzellen und dortige Beseitigung durch thermische Abreaktion kann somit besonders effektiv und zuverlässig durchgeführt und eine Ansammlung von Brenngas in dem Einbauraum und somit die Bildung explosiver Gemische wirkungsvoll verhindert werden. Es kann somit ohne ein zusätzliches Gebläse (oder ein sehr viel kleineres Gebläse) ein Luftaustausch in dem Einbauraum ermöglicht werden. Dadurch wird der Anlagenwirkungsgrad höher und der Aufwand an Komponenten geringer. Weiterhin kann die Ansaugeinrichtung vereinfacht werden.

Die Luft kann hierbei den Einbauraum vollständig oder auch nur teilweise durchströmen. Durch entsprechende Wahl des Strömungsweges durch den Einbauraum können gezielt Bereiche mit einer möglichen Ansammlung von Brenngas mit Luft durchströmt werden. Ist beispielsweise das Brenngas schwerer als Luft, kann der Strömungsweg so gelegt werden, dass der Einbauraum schwerpunktmäßig in seinem räumlich unteren Bereich durchströmt wird. Ist dagegen das Brenngas leichter als Luft, kann der Einbauraum schwerpunktmäßig in seinem räumlich oberen Bereich durchströmt werden.

Gemäß einer weiteren besonders vorteilhaften Ausgestaltung des erfindungsgemäßen Verfahrens umströmt die Luft bei ihrem Strömen durch den Einbauraum Komponenten der Brennstoffzellenanlage. Hierdurch kann aus Komponenten der Brennstoffzellenanlage austretendes Brenngas bereits bei seinem Austreten zuverlässig abgefördert werden.

Explosive Gemische können dann mit größter Sicherheit vermieden werden, wenn der gesamte Einbauraum von Luft durchströmt wird. Dies kann durch geeignete Anordnung der Lufteinleitung(en), d.h. der Orte, an denen die Luft in den Einbauraum eintritt, in Bezug auf den Ort der Ansaugung der Luft in dem Einbauraum erfolgen.

Bevorzugt wird die Luft nach der Einleitung in den Einbauraum aber vor der Zuführung zu den Kathoden der Brennstoffzellen gereinigt und/oder aufbereitet. Die Luftzufuhr zu den Brennstoffzellen über den Einbauraum ermöglicht es, das Volumen des Einbauraumes für die Unterbringung von Mitteln zur Luftreinigung und Luftaufbereitung zu nutzen. Hierbei kann es sich z.B. um Partikelfilter und/oder Adsorptionsfilter zur Entfernung von Salznebel sein, die insbesondere bei Brennstoffzellenanlagen auf Schiffen oder im Offshore-Bereich von Bedeutung sein können.

Zusätzlich kann die Luft auch bereits vor der Einleitung in den Einbauraum gereinigt werden. Dies kann insbesondere bei Brennstoffzellenanlagen für maritime Einsatzzwecke, wie z.B. auf Schiffen, genutzt werden.

Gemäß einer besonders vorteilhaften Ausgestaltung des erfindungsgemäßen Verfahrens ist der Volumenstrom der aus dem Einbauraum den Kathoden zugeführte Luft steuerbar. Der Volumenstrom kann somit dem Luftbedarf der Brennstoffzellenanlage angepasst werden.

Wenn der Volumenstrom der aus dem Einbauraum der Kathoden zugeführten Luft einen vorgegebenen Grenzwert nicht unterschreitet, kann auch bei einem Leerlauf der Brennstoffzellenanlage sichergestellt werden, dass ausreichend Luft durch den Einbauraum strömt, um ausgetretenes Brenngas abzufördern.

Eine sichere Abförderung ausgetretenen Brenngases und gleichzeitig eine weitestgehend bedarfgeregelte Luftzufuhr zu den Kathoden der Brennstoffzellen kann dadurch erzielt werden, dass der Volumenstrom der aus dem Einbauraum den Kathoden zugeführten Luft bis zu einem vorgegebenen Grenzwert des von den Brennstoffzellen erzeugten Stromes konstant ist und nach Überschreiten des Grenzwertes proportional zu dem Strom erhöht wird. Bis zu dem Grenzwert des von den Brennstoffzellen erzeugten Stromes wird durch den konstanten Luftvolumenstrom sichergestellt, dass eine Mindestluftmenge durch den Einbauraum strömt, um eine ausreichende Abförderung austretenden Brenngases zu gewährleisten. Nach Überschreiten des vorgegebenen Grenzwertes wird der Luftvolumenstrom, ausgehend von dem konstanten Wert, proportional zu dem Strom erhöht und somit eine bedarfgerechte Luftzuführung zu den Brennstoffzellen gewährleistet.

Bei der erfindungsgemäßen Anordnung weist die Ansaugeinrichtung eine Ansaugöffnung auf, durch die Luft aus dem Einbauraum ansaugbar ist. Zudem ist zumindest ein Lufteinleitungsmittel zur Einleitung von Luft in den Einbauraum vorgesehen. Bei dem zumindest einen Lufteinleitungsmittel kann es sich beispielsweise um einen in den Einbauraum mündenden Kanal oder um ein Rohr handeln, durch den oder das Luft in den Einbauraum eindringen kann. Im Fall, dass der Einbauraum von einem Gehäuse begrenzt wird, handelt es sich bei der Einrichtung zur Lufteinleitung beispielsweise um eine Öffnung in dem Gehäuse, durch die Luft von außerhalb des Gehäuses in den Einbauraum eindringen kann. Die Ansaugvorrichtung kann ein, zwei oder auch mehr Ansaugöffnungen in den Einbauraum aufweisen. Durch die Anzahl der Ansaugöffnungen, deren Anordnung zueinander, zu der Brennstoffzellenanlage und zu der (den) die Lufteinleitung(en) in den Einbauraum, d.h. dem oder den Orten, an denen die Luft von dem oder den Lufteinleitungsmitteln in den Einbauraum eintritt, können gezielt Strömungswege für die Luft in den Einbauraum eingestellt werden, um in bestimmten, gewünschten Beeichen des Einbauraumes eine sichere und zuverlässig Abförderung ausgetretenen Brenngases zu ermöglichen.

Bevorzugt ist (sind) die Lufteinleitung(en) in den Einbauraum und die zumindest eine Ansaugöffnung zueinander derart angeordnet, dass die eingeleitete Luft Komponenten der Brennstoffzellenanlage umströmt. Hierdurch kann austretendes Brenngas bereits bei seinem Austreten von der Luftströmung erfasst und zu den Kathoden der Brennstoffzellen abgefördert werden.

Eine besonders gute Umströmung der Komponenten der Brennstoffzellenanlage durch die Luft und somit ein besonders guter Abtransport austretenden Brenngases ist dann möglich, wenn die Komponenten der Brennstoffzellenanlage räumlich zwischen der zumindest einen Ansaugöffnung der Ansaugeinrichtung und der (den) Lufteinleitungen in dem Einbauraum angeordnet sind.

Gemäß einer besonders vorteilhaften Ausgestaltung der erfindungsgemäßen Anordnung sind die Lufteinleitung(en) in den Einbauraum und die zumindest eine Ansaugöffnung zueinander derart angeordnet, dass der gesamte Einbauraum von Luft durchströmbar ist.

Bevorzugt wird der Einbauraum durch ein Gehäuse begrenzt. Dieses Gehäuse kann zum Schutz der Brennstoffzellenanlage vor äußeren Einflüssen sowie zum Transport der Brennstoffzellenanlage dienen. Gemäß einer besonders vorteilhaften Ausgestaltung der Erfindung weist das Gehäuse ein Containerformat, insbesondere ein 20 ft-Transportcontainerformat auf. Die Brennstoffzellenanlage kann hierdurch mit geringem Aufwand mit herkömmlichen Transportmitteln, wie z.B. Bahn, Schiff, LKW oder Flugzeug, kostengünstig, flexibel und innerhalb kurzer Zeit zu einem gewünschten Einsatzort bewegt werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: in prinzipieller und vereinfachter Darstellung einen Schnitt durch eine in einem Einbauraum angeordnete Brennstofzellenanlage mit einer ebenfalls in dem Einbauraum angeordneten Ansaugöffnung für die Luft,
- FIG 2: in prinzipieller und vereinfachter Darstellung einen Schnitt durch eine in einem Einbauraum angeordneten Brennstoffzellenanlage mit einer in einer Einbauraumbegrenzung angeordneten Ansaugöffnung für die Luft,
- FIG 3: in prinzipieller Darstellung einen Schnitt durch eine in einem Transportcontainer angeordnete Brennstoffzellenanlage für maritime Einsatzzwecke und
- FIG 4: ein Diagramm, in dem der Luftvolumenstrom aus dem Einbauraum gegen den in den Brennstoffzellen erzeugten elektrischen Strom aufgetragen ist.

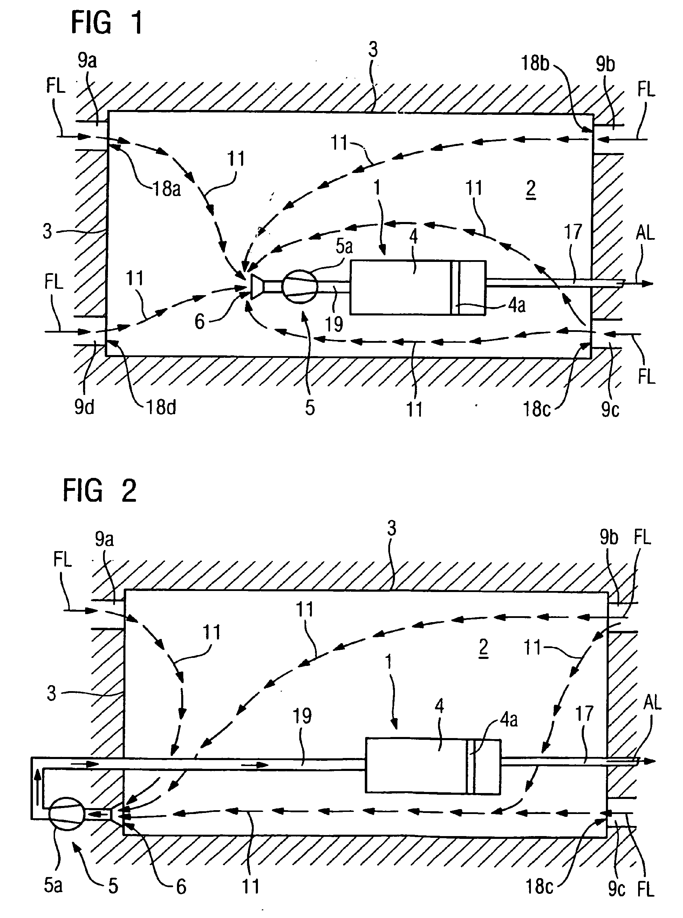

Figur 1 zeigt eine Brennstoffzellenanlage 1, die in einem Einbauraum 2 angeordnet bzw. aufgestellt ist, der durch Wände 3 begrenzt wird. Die Brennstoffzellenanlage 1 umfasst einen Stapel 4 aus elektrisch hintereinandergeschalteten Brennstoffzellen. In der Figur 1 ist angedeutet, dass ein solcher Brennstoffzellenstapel 4, der in der Fachterminologie kurz als Stack bezeichnet wird, einzelne Brennstoffzellen 4a enthält. Die Brennstoffzellen 4a werden mit Wasserstoff als Brenngas und mit Luft betrieben. Die Zu- und Abfuhr des Brenngases ist zur Vereinfachung der Darstellung in FIG 1 nicht dargestellt. Es ist auch möglich, dass in dem Einbauraum zusätzlich ein Reformer zur Erzeugung des Brenngases aus einem Energieträger wie z.B. Erdgas angeordnet ist.

Über Kanäle 9a - 9d ist Frischluft FL für den Betrieb der Brennstoffzellen 4a des Brennstoffzellenstapels 4 in den Einbauraum 2 einleitbar. Über eine Abfuhrleitung 17 erfolgt die Abfuhr von Abluft AL aus dem Brennstoffzellenstapel 4 und dem Einbauraum 2.

Die Brennstoffzellenanlage 1 weist eine in dem Einbauraum 2 angeordnete Ansaugvorrichtung 5 mit einer Ansaugöffnung 6 auf, durch die Luft aus dem Einbauraum 2 ansaugbar und über eine Zufuhrleitung 19 den Kathoden der Brennstoffzellen 4a des Brennstoffzellenstapels 4 zuführbar ist. Die Ansaugvorrichtung 5 weist zur Ansaugung und Verdichtung der Luft eine Verdichter 5a auf.

Durch die Ansaugöffnung 6 der Ansaugvorrichtung 5 wird Frischluft FL aus dem Einbauraum 2 angesaugt, die wiederum über die Kanäle 9a - 9d von außerhalb des Einbauraumes 2 angesaugt wird. Die über die Kanäle 9a - 9d in den Einbauraum 2 eingeleitet Luft durchströmt auf ihrem Weg zu der Ansaugöfnung 6 den Einbauraum 2 und zieht hierbei aus der Brennstoffzellenanlage 1 ausgetretenes Brenngas mit sich in. Die Strömungsrichtungen der Frischluft FL in dem Einbauraum 2 sind in der Figur 1 durch die Pfeile 11 angedeutet.

Das ausgetretene Brenngas wird somit mit der Luft FL aus dem Einbauraum 2 abgefördert und über die Luftzufuhrleitung 19 den Kathoden der Brennstoffzellen 4a des Brennstoffzellenstapels 4 zugeführt, wo es zu einer thermischen Abreaktion des Wasserstoffes, d.h. einer exothermen Reaktion des Wasserstoffes mit dem Luftsauerstoff, kommt. Hierdurch wird der Wasserstoff beseitigt. Durch die Abförderung des in den Einbauraum 2 ausgetretenen Wasserstoffes kann eine Ansammlung von Wasserstoff und damit eine Bildung explosiver Gemische in dem Einbauraum 2 wirksam verhindert werden.

Die Lufteinleitung 18a-18d, d.h. die Orte, an denen die Luft von den Kanälen 9a- 9d in den Einbauraum 2 eintritt, und die Ansaugöffnung 6 sind in dem Einbauraum 2 derart angeordnet, dass die eingeleitete Frischluft FL den Brennstoffzellenstapel 4 umströmt. Somit kann aus dem Brennstoffzellenstapel 4 austretender Wasserstoff bereits bei seinem Austreten abgefördert werden.

Darüber hinaus sind die Lufteinleitungen 18a - 18d und die Ansaugöffnung 6 in dem Einbauraum 2 derart angeordnet, dass der gesamte Einbauraum von Luft FL durchströmbar ist. Hierzu ist in jedem der Eckbereiche des Einbauraumes 2 jeweils ein Kanal mit einer Lufteinleitung vorgesehen.

Im Ausführungsbeispiel gemäß FIG 1 ist die Ansaugöffnung 6 innerhalb des Einbauraums 2 angeordnet und die Luft wird direkt, d.h. ohne den Einbauraum 2 zu verlassen, dem Brennstoffzellenstapel 4 zugeführt. Die Ansaugöffnung 6 kann aber auch - wie in dem in FIG 2 gezeigten Ausführungsbeispiel dargestellt - in einer der den Einbauraum 2 begrenzenden Wände 3 angeordnet sein, so dass die Luft zuerst aus dem Einbauraum 2 abgesaugt und anschließend über die Zuführleitung 19 dem Brennstoffzellenstapel 4 von außerhalb des Einbauraumes 2 wieder zugeführt wird. Die Ansaugvorrichtung 5 kann dann zumindest teilweise außerhalb des Einbauraumes 2 angeordnet werden.

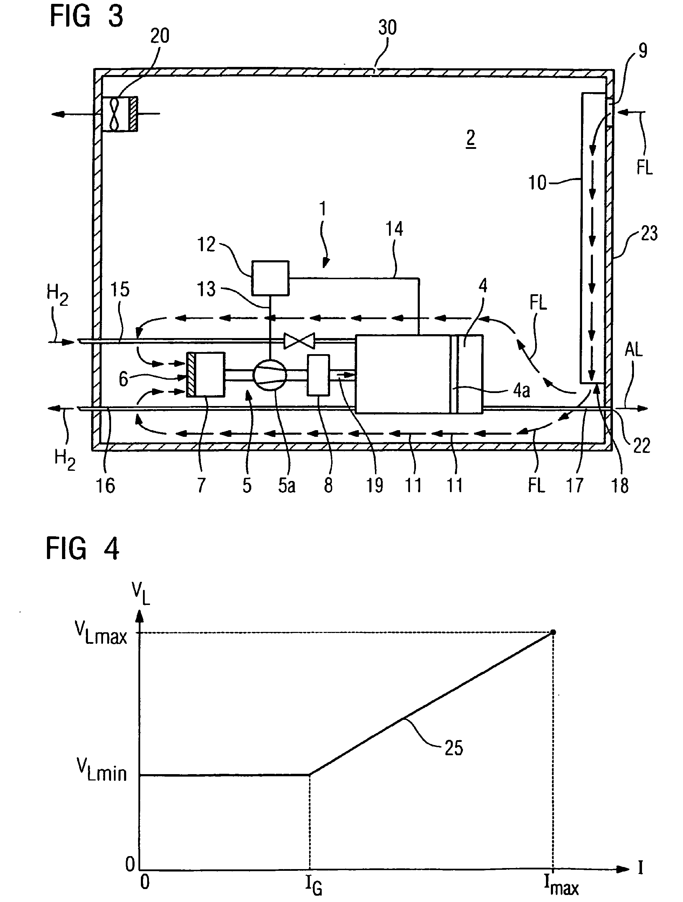

FIG 3 zeigt in prinzipieller Darstellung einen Schnitt durch eine in einem Gehäuse 30 angeordnete Brennstoffzellenanlage 1 für maritime Einsatzzwecke. Bei der Brennstoffzellenanlage 1 handelt es sich beispielsweise um eine containerisierte Brennstoffzellenanlage, die als Stromerzeugungsaggregat auf Schiffen oder Offshore-Anlagen eingesetzt werden kann. Das Gehäuse 30 weist hierbei bevorzugt 20ft-Transportcontainerformat auf.

Die Brennstoffzellenanlage 1 weist weiterhin eine in dem Einbauraum 2 angeordnete Ansaugvorrichtung 5 mit einer Ansaugöffnung 6 auf, durch die Luft aus dem Einbauraum ansaugbar und über eine Zufuhrleitung 19 den Kathoden der Brennstoffzellen 4a des Brennstoffzellenstapels 4 zuführbar ist. Die Ansaugvorrichtung 5 weist zur Ansaugung und Verdichtung der Luft eine Verdichter 5a auf.

Die Zufuhr des Wasserstoffs zu dem Brennstoffzellenstapel 4 erfolgt aus einem nicht näher dargestellten, außerhalb des Gehäuses 30 angeordneten Wasserstofftank über eine Zufuhrleitung 15. In dem Brennstoffzellenstapel 4 wird nicht verbrauchter (Rest-)Wasserstoff über eine Abfuhrleitung 16 aus dem Gehäuse 3 abgeführt.

Das Gehäuse 30 weist eine Lufteintrittsöffnung 9 auf, über die Frischluft FL von außerhalb des Einbauraumes 2 in den Einbauraum 2 einleitbar ist. Zur Reinigung der Frischluft FL vor der Lufteinleitung 18 in den Einbauraum 2 sind Luftreinigungsmittel 10 vorgesehen. Hierbei handelt es sich beispielsweise um Partikelfilter und/oder Adsorptionsfilter, z.B. zur Entsalzung der Luft.

Zur weiteren Reinigung und Aufbereitung (z.B. Befeuchtung) der Luft, sind nach deren Einleitung in den Einbauraum, aber vor deren Zuführung zu dem Brennstoffzellenstapel 4, weitere Mittel vorgesehen. Hierbei handelt es sich um einen in die Ansaugöffnung 6 integrierten Luftfilter 7 sowie um eine in die Luftzufuhrleitung 19 zu dem Brennstoffzellenstapel 4 geschaltete Luftaufbereitung, z.B. zur Befeuchtung der Luft.

Die Lufteinleitung 18 in den Einbauraum 2 und die Ansaugöffnung 6 sind in dem Einbauraum 2 derart angeordnet, dass die eingeleitete Frischluft FL Komponenten der Brennstoffzellenanlage 1 wie z.B. den Brennstoffzellenstapel 4 und die Zu- und Abfuhrleitungen 18 bzw. 19 für den Wasserstoff umströmt. Die Strömungsrichtung der Frischluft FL ist in der Figur 3 durch die Pfeile 11 angedeutet.

Das Gehäuse 30 weist für die Abfuhr der Abluft AL aus dem Brennstoffzellenstapel 4 eine zweite Öffnung 22 auf. Um einen Luftkurzschluss zwischen der angesaugten Frischluft FL und der abgeführten Abluft AL zu vermeiden, sind die erste Öffnung 9 und die zweite Öffnung 22 voneinander räumlich entfernt. Die erste Öffnung 9 ist hierzu im oberen Bereich einer Seitenwand 23 des Gehäuses 30 angeordnet, während die zweite Öffnung 22 im unteren Bereich der Seitenwand 23 angeordnet ist. Durch die Anordnung der ersten Öffnung 9 für die Luftzufuhr kann zudem ein Eintritt von Wasser in den Einbauraum 2 verhindert werden. Ein Gebläse 20 ist für eine Zwangsbelüftung des Einbauraumes 2 im Fall einer zu hohen Brenngaskonzentration vorgesehen.

Die Ansaugvorrichtung 5 ist hinsichtlich des aus dem Einbauraum 2 ansaugbaren Luftvolumenstromes durch eine Steuerungseinrichtung 12 steuerbar. Die Steuerungseinrichtung 12 steuert hierbei die Drehzahl des Luftverdichters 5a der Ansaugvorrichtung 5 über eine Steuerleitung 13 derart, dass der Volumenstrom der aus dem Einbauraum 2 den Kathoden der Brennstoffzellen 4a zugeführten Luft einen vorgegebenen Grenzwert nicht unterschreitet. Hierdurch wird sichergestellt, dass auch bei einem Betrieb der Brennstoffzellenanlage mit kleiner Last oder bei Leerlaufbetrieb stets ein ausreichender Luftstrom die Komponenten der Brennstoffzellenanlage umspült, um aus den Komponenten austretenden Wasserstoff sicher abzubefördern.

Die Steuerungseinrichtung 12 ist hierzu über eine Messleitung 14 mit einem nicht näher dargestellten Stromistwertsensor zur Messung des von dem Brennstoffzellenstapel 4 erzeugten Stromes verbunden und steuert die Ansaugvorrichtung 5 gemäß Figur 2 derart, dass der Volumenstrom V_{L} der aus dem Einbauraum 2 den Kathoden der Brennstoffzellen 4a zugeführte Luft bis zu einem vorgegebenen Grenzwert I_{G} des von den Brennstoffzellen erzeugten Stromes I einen konstanten Wert V_{Lmin} aufweist und nach Überschreiten des Grenzwertes I_{G} proportional zu dem Strom I erhöht wird. Bei Volllast der Brennstoffzellenanlage, d.h. bei maximalem Strom Iₘₐₓ liegt der maximale Luftvolumenstrom V_{Lmax} vor. Der Zusammenhang zwischen dem Volumenstrom V_{L} der aus dem Einbauraum 2 abgeführten und den Kathoden der Brennstoffzellen 4a zugeführten Luft ist in dem Diagramm der Figur 4 durch die Kennlinie 25 veranschaulicht.

Bei geringer Last an der Brennstoffzellenanlage 2 und damit geringem Strom I wird durch die Steuerungseinrichtung 12 somit ein Luftvolumenstrom eingestellt, der zwar über dem eigentlichen Bedarf der Brennstoffzellenanlage liegt, der aber sicherstellt, dass austretender Wasserstoff zuverlässig abgeführt wird. Erst nach Überschreiten des Grenzwertes I_{G}, der z.B. bei 40 % des maximalen Stromes Iₘₐₓ liegt, wird durch die Steuerungseinrichtung 12 auf eine bedarfsgerechte Luftversorgung umgeschaltet.

## Patentansprüche

1. Verfahren zum Betreiben einer in einem Einbauraum (2) angeordneten und mit einem Brenngas und mit Luft (FL) betriebenen Brennstoffzellenanlage (1), wobei aus der Brennstoffzellenanlage (1) in den Einbauraum (2) ausgetretenes Brenngas zu Kathoden von Brennstoffzellen (4a) der Brennstoffzellenanlage (1) geführt und dort mit der Luft (FL) thermisch abreagiert wird, wobei die Luft (FL) in den Einbauraum (2) geleitet wird, durch den Einbauraum strömt und anschließend den Kathoden der Brennstoffzellen (4a) zugeführt wird,
**dadurch gekennzeichnet, dass** der Volumenstrom (VL) der aus dem Einbauraum (2) den Kathoden zugeführten Luft (FL) einen vorgegebenen Grenzwert (V_{Lmin}) nicht unterschreitet, bei dem ausreichend Luft (FL) durch den Einbauraum (2) strömt, um ausgetretenes Brenngas abzufördern.

2. Verfahren nach Anspruch 1,
**dadurch gekennzeichnet, dass** die Luft (FL) bei ihrem Strömen durch den Einbauraum (2) Komponenten (4) der Brennstoffzellenanlage (1) umströmt.

3. Verfahren nach einem der vorhergehenden Ansprüche,
**dadurch gekennzeichnet, dass** der gesamten Einbauraum (2) von Luft (FL) durchströmt wird.

4. Verfahren nach einem der vorhergehenden Ansprüche,
**dadurch gekennzeichnet, dass** die Luft (FL) nach der Einleitung in den Einbauraum (2) aber vor der Zuführung zu den Kathoden der Brennstoffzellen (4a) gereinigt und/oder aufbereitet wird.

5. Verfahren nach einem der vorhergehenden Ansprüche,
**dadurch gekennzeichnet, dass** die Luft (FL) vor der Einleitung in den Einbauraum (2) gereinigt wird.

6. Verfahren nach einem der vorhergehenden Ansprüche,
**dadurch gekennzeichnet, dass** der Volumenstrom (VL) der aus dem Einbauraum (2) den Kathoden der Brennstoffzellen (4a) zugeführten Luft (FL) gesteuert oder geregelt wird.

7. Verfahren nach einem der vorhergehenden Ansprüche,
**dadurch gekennzeichnet, dass** der Volumenstrom (VL) der aus dem Einbauraum (2) den Kathoden zugeführten Luft (FL) bis zu einem vorgegebene Grenzwert (I_{G}) des von den Brennstoffzellen erzeugten Stromes (I) konstant ist und nach Überschreiten des Grenzwertes (IG) proportional zu dem Strom (I) erhöht wird.

8. Anordnung zur Durchführung des Verfahrens nach einem der vorhergehenden Ansprüche, mit einer in einem Einbauraum (2) angeordneten und mit einem Brenngas und mit Luft (FL) betriebenen Brennstoffzellenanlage (1) und mit einer Ansaugeinrichtung (5), durch die aus der Brennstoffzellenanlage (1) in den Einbauraum (2) ausgetretenes Brenngas ansaugbar und Kathoden von Brennstoffzellen (4a) der Brennstoffzellenanlage (1) zuführbar ist, wobei die Ansaugeinrichtung (5) zumindest eine Ansaugöffnung (6) aufweist, durch die Luft (FL) aus dem Einbauraum (2) ansaugbar ist und zumindest ein Lufteinleitungsmittel (9, 9a-d) zur Einleitung von Luft (FL) von außerhalb des Einbauraumes (2) in den Einbauraum (2) vorhanden ist,
**dadurch gekennzeichnet, dass** die Ansaugvorrichtung (5) hinsichtlich des aus dem Einbauraum (2) ansaugbaren Luftvolumenstroms (V_{L}) durch eine Steuerungseinrichtung (12) steuerbar ist, wobei die Steuerungseinrichtung (12) die Ansaugvorrichtung (5) derart steuert, dass der Luftvolumenstrom (V_{L}) der aus dem Einbauraum (2) den Kathoden der Brennstoffzelle (4a) zugeführten Luft (FL) einen vorgegebenen Grenzwert (V_{Lmin}) nicht unterschreitet, bei dem ausreichend Luft (FL) durch den Einbauraum (2) strömt, um ausgetretenes Brenngas abzufördern.

9. Anordnung nach Anspruch 8,
**dadurch gekennzeichnet, dass** die Lufteinleitung(en) (18, 18a-18d) in den Einbauraum (2) und die zumindest eine Ansaugöffnung (6) zueinander derart angeordnet sind, dass die eingeleitet Luft (FL) Komponenten der Brennstoffzellenanlage (1) umströmt.

10. Anordnung nach Anspruch 9,
**dadurch gekennzeichnet, dass** die Komponenten der Brennstoffzellenanlage (1) räumlich zwischen der zumindest einen Ansaugöffnung (6) und der (den) Lufteinleitung(en) (18) in den Einbauraum (2) angeordnet sind.

11. Anordnung nach einem der Ansprüche 8 bis 10,
**dadurch gekennzeichnet, dass** die Lufteinleitung(en) (18) in den Einbauraum (2) und die zumindest eine Ansaugöffnung (6) zueinander derart angeordnet sind, dass der gesamte Einbauraum (2) von Luft (FL) durchströmbar ist.

12. Anordnung nach einem der Ansprüche 8 oder 11,
**dadurch gekennzeichnet, dass** Luftreinigungsmittel (10) zur Reinigung der Luft (FL) vor der Lufteinleitung in den Einbauraum (2) vorgesehen sind.

13. Anordnung nach einem der Ansprüche 8 bis 12,
**dadurch gekennzeichnet, dass** Mittel (7, 8) zur Reinigung und/oder Aufbereitung der Luft (FL) nach deren Einleitung in den Einbauraum (2), aber vor deren Zuführung zu den Brennstoffzellen (4a) vorgesehen sind.

14. Anordnung nach Anspruch 8,
**dadurch gekennzeichnet, dass** die Steuerungseinrichtung (12) Mittel (14) zur Messung des von den Brennstoffzellen (4a) erzeugten Stromes aufweist und die Ansaugvorrichtung (5) derart steuert, dass der Luftvolumenstrom (V_{L}) der aus dem Einbauraum (2) den Kathoden zugeführten Luft (FL) bis zu einem vorgegebene Grenzwert (I_{G}) des von den Brennstoffzellen (4a) erzeugten Stromes konstant ist und nach Überschreiten des Grenzwertes (I_{G}) proportional zu dem Strom (I) erhöht wird.

15. Anordnung nach einem der Ansprüche 8 bis 14,
**dadurch gekennzeichnet, dass** der Einbauraum (2) durch ein Gehäuse (30) begrenzt ist.

16. Anordnung nach Anspruch 15,
**dadurch gekennzeichnet, dass** das Gehäuse Containerformat, insbesondere 20 ft-Transportcontainerformat, aufweist.

## Claims

1. Method for operating a fuel cell installation (1) arranged in an enclosure (2) and operated with a combustion gas and with air (FL), wherein combustion gas that has emerged into the enclosure (2) from the fuel cell installation (1) is routed to cathodes of fuel cells (4a) of the fuel cell installation (1) and undergoes a thermal reaction there with the air (FL), wherein the air (FL) is conveyed into the enclosure (2), flows through the enclosure and is subsequently routed to the cathodes of the fuel cell (4a), **characterised in that**, the volume flow (VL) of the air (FL) routed out of the enclosure (2) to the cathodes does not fall below a predetermined limit value (V_{Lmin}), at which sufficient air (FL) flows through the enclosure (2) in order to transport away the combustion gas that has emerged.

2. Method according to claim 1,
**characterised in that** the air (FL) flows around components (4) of the fuel cell installation (1) when flowing through the enclosure (2).

3. Method according to one of the preceding claims,
**characterised in that** all of the enclosure (2) has air (FL) flowing through it.

4. Method according to one of the preceding claims,
**characterised in that** the air (FL) is cleaned and/or prepared after its introduction into the enclosure (2) but before being conveyed to the cathodes of the fuel cells (4a).

5. Method according to one of the preceding claims,
**characterised in that** the air (FL) is cleaned before its introduction into the enclosure (2).

6. Method according to one of the preceding claims,
**characterised in that** the volume flow (VL) of the air (FL) conveyed from the enclosure (2) to the cathodes of the fuel cells (4a) is controlled or regulated.

7. Method according to one of the preceding claims,
**characterised in that** the volume flow (VL) of the air (FL) conveyed from the enclosure (2) to the cathodes is constant up to a predetermined limit value (I_{G}) of the current (I) generated by the fuel cells (I) and after the limit value (I_{G}) is exceeded, is increased proportionally to the current (I).

8. Arrangement for executing the method according to one of the preceding claims, with a fuel cell installation (1) arranged in an enclosure (2) and operated with a combustion gas and with air (FL) and with a suction device (5), through which the combustion gas that has emerged from the fuel cell installation (1) into the enclosure (2) is able to be sucked in and is able to be conveyed to cathodes of fuel cells (4a) of the fuel cell installation (1), wherein the suction device (5) has at least one intake opening (6) through which air (FL) is able to be sucked out of the enclosure (2) and at least one air introduction means (9, 9a-d) for introducing air (FL) from outside the enclosure (2) into the enclosure (2) is present,
**characterised in that** the suction device (5) is able to be controlled by a control device (12) in respect of the air volume flow (V_{L}) able to be sucked out of the enclosure (2), wherein the control device (12) controls the suction device (5) such that the air volume flow (V_{L}) of the air (FL) conveyed out of the enclosure (2) to the cathodes of the fuel cell (4a) does not fall below a predeterminable limit value (V_{Lmin}) at which sufficient air (FL) is flowing through the enclosure (2) in order to transport away emerging combustion gas.

9. Arrangement according to claim 8,
**characterised in that** the air inlet(s) (18, 18a-18d) in the enclosure (2) and the at least one intake opening (6) are disposed in relation to one another such that the introduced air (FL) flows around components of the fuel cell installation (1).

10. Arrangement according to claim 9,
**characterised in that** the components of the fuel cell installation (1) are disposed spatially between the at least one intake opening (6) and the air inlet(s) (18) in the enclosure (2).

11. Arrangement according to one of claims 8 to 10,
**characterised in that** the air inlet (s) (18) in the enclosure (2) and the at least one intake opening (6) are disposed in relation to each other such that the whole of the enclosure (2) is able to have air (FL) flowing through it.

12. Arrangement according to one of claims 8 or 11,
**characterised in that** air cleaning means (10) for cleaning the air (FL) are provided before the air is introduced into the enclosure (2):

13. Arrangement according to one of claims 8 to 12,
**characterised in that** means (7, 8) are provided for cleaning and/or preparing the air (FL) after its introduction into the enclosure (2), but before it is conveyed to the fuel cells (4a).

14. Arrangement according to claim 8,
**characterised in that** the control device (12) has means (14) for measuring current generated by the fuel cells (4a) and controls the suction device (5) such that the air volume flow (V_{L}) of the air (FL) routed to the cathodes from the enclosure (2) is constant up to a predetermined limit value (I_{G}) of the current generated by the fuel cells (4a) and, after the limit value (I_{G}) is exceeded, is increased proportionally to the current (I).

15. Arrangement according to one of claims 8 to 14,
**characterised in that** the enclosure (2) is delimited by a housing (30).

16. Arrangement according to claim 15,
**characterised in that** the housing has a container format, especially a 20 ft transport container format.

## Revendications

1. Procédé pour faire fonctionner une installation (1 ) de pile à combustible disposée dans un espace ( 2 ) de montage et fonctionnant avec un gaz combustible et avec de l'air ( FL ), dans lequel du gaz combustible sorti de l'installation ( 1 ) de pile à combustible et allant dans l'espace ( 2 ) de montage est envoyé aux cathodes de piles ( 4a ) à combustible de l'installation ( 1 ) de pile à combustible et y réagit thermiquement avec l'air ( FL ), l'air ( FL ) étant envoyé dans l'espace ( 2 ) de montage, passant dans l'espace de montage et étant envoyé ensuite aux cathodes des piles ( 4a ) à combustible,
**caractérisé en ce que** le courant ( VL ) en volume de l'air ( FL ) envoyé de l'espace ( 2 ) de montage aux cathodes n'est pas inférieur à une valeur ( VLₘᵢₙ ) limite prescrite, pour laquelle suffisamment d'air ( FL ) passe dans l'espace ( 2 ) de montage pour évacuer du gaz combustible sorti.

2. Procédé suivant la revendication 1,
**caractérisé en ce que** l'air ( FL ) passe, lors de son passage dans l'espace ( 2 ) de montage, autour d'éléments ( 4 ) de l'installation ( 1 ) de pile à combustible.

3. Procédé suivant l'une des revendications précédentes,
**caractérisé en ce que** tout l'espace ( 2 ) de montage est parcouru par de l'air ( FL ).

4. Procédé suivant l'une des revendications précédentes,
**caractérisé en ce que** l'air ( FL ), après l'introduction dans l'espace ( 2 ) de montage mais avant l'envoi aux cathodes des piles ( 4a ) à combustible, est épuré et/ou traité.

5. Procédé suivant l'une des revendications précédentes,
**caractérisé en ce que** l'air ( FL ) est épuré avant l'envoi dans l'espace ( 2 ) de montage.

6. Procédé suivant l'une des revendications précédentes,
**caractérisé en ce que** le courant ( VL ) en volume de l'air ( FL ) envoyé de l'espace ( 2 ) de montage aux cathodes des piles ( 4a ) à combustible est commandé et régulé.

7. Procédé suivant l'une des revendications précédentes,
**caractérisé en ce que** le courant ( VL ) en volume de l'air ( FL ) envoyé de l'espace ( 2 ) de montage aux cathodes est constant jusqu'à une valeur ( IG ) limite prescrite du courant ( I ) électrique produit par les piles à combustible et, après que la valeur ( IG ) limite est dépassée, est proportionnel au courant ( I ).

8. Dispositif pour effectuer les procédés suivant l'une des revendications précédentes, comprenant une installation ( 1 ) de pile à combustible disposée dans un espace ( 2 ) de montage et fonctionnant avec un gaz combustible et avec de l'air ( FL ) et ayant un dispositif ( 5 ) d'aspiration dans lequel le gaz combustible sorti de l'installation ( 1 ) de pile à combustible et allant dans l'espace ( 2 ) de montage peut être aspiré et peut être envoyé aux cathodes de piles ( 4a ) à combustible de l'installation ( 1 ) de pile à combustible, le dispositif ( 5 ) d'aspiration ayant au moins une ouverture ( 6 ) d'aspiration par laquelle de l'air ( FL ) peut être aspiré de l'espace ( 2 ) de montage et au moins un moyen ( 9, 9a-d ) d'introduction d'air pour introduire de l'air ( FL ) de l'extérieur de l'espace ( 2 ) de montage est présent, **caractérisé en ce que** le dispositif ( 5 ) d'aspiration est, du point de vue du courant ( VL ) en volume d'air pouvant être aspiré de l'espace ( 2 ) de montage, être commandé par un dispositif ( 12 ) de commande, le dispositif ( 12 ) de commande commandant le dispositif ( 5 ) d'aspiration de manière à ce que le courant ( VL ) en volume de l'air ( FL ) envoyé de l'espace ( 2 ) de montage aux cathodes des piles ( 4a ) à combustible ne devienne pas inférieur à une valeur ( VLₘᵢₙ ) limite prescrite pour laquelle suffisamment d'air ( FL ) passe dans l'espace ( 2 ) de montage pour évacuer du gaz combustible sorti.

9. Dispositif suivant la revendication 8,
**caractérisé en ce que** l'entrée ou les entrées ( 18, 18a-18d ) d'air dans l'espace ( 2 ) de montage et la au moins une ouverture ( 6 ) d'aspiration sont disposées l'une par rapport à l'autre de manière à ce que l'air ( FL ) introduit passe autour d'éléments de l'installation ( 1 ) de pile à combustible.

10. Dispositif suivant la revendication 9,
**caractérisé en ce que** les éléments de l'installation ( 1 ) de pile à combustible sont disposés spatialement entre au moins une ouverture ( 6 ) d'aspiration et la ou les entrées ( 18 ) d'air dans l'espace ( 2 ) de montage.

11. Dispositif suivant l'une des revendications 8 à 10,
**caractérisé en ce que** la ou les entrées ( 18 ) d'air dans l'espace ( 2 ) de montage est la au moins une ouverture ( 6 ) d'aspiration sont disposées l'une par rapport à l'autre de manière à ce que tout l'espace ( 2 ) de montage puisse être traversé par de l'air ( FL ).

12. Dispositif suivant l'une des revendications 8 ou 11,
**caractérisé en ce qu'**il est prévu des moyens ( 10 ) d'épuration de l'air pour épurer l'air ( FL ) avant l'entrée de l'air dans l'espace ( 2 ) de montage.

13. Dispositif suivant l'une des revendications 8 à 12,
**caractérisé en ce qu'**il est prévu des moyens ( 7, 8 ) d'épuration et/ou de traitement de l'air ( FL ) après son introduction dans l'espace ( 2 ) de montage, mais avant son envoi aux piles ( 4a ) à combustible.

14. Dispositif suivant la revendication 8,
**caractérisé en ce que** le dispositif ( 12 ) de commande a des moyens ( 14 ) de mesure du courant électrique produit par les piles ( 4a ) à combustible et le dispositif ( 5 ) d'aspiration est commandé de manière à ce que le courant ( VL ) en volume de l'air ( FL ) envoyé de l'espace ( 2 ) de montage aux cathodes soit constant jusqu'à une valeur ( IG ) limite prescrite du courant électrique produit, par les piles ( 4a ) à combustible et, après que la valeur ( IG ) limite est dépassée, soit augmenté proportionnellement au courant ( I ) électrique.

15. Dispositif suivant l'une des revendications 8 à 14,
**caractérisé en ce que** l'espace ( 2 ) de montage est délimité par une enveloppe ( 30 ).

16. Dispositif suivant la revendication 15,
**caractérisé en ce que** l'enveloppe a un format de conteneur, notamment un format de conteneur de transport de 20 ft.
